# EUROPÄISCHE PATENTANMELDUNG

(11) **EP 2 332 755 A2**
(43) Veröffentlichungstag der Anmeldung: **15.06.2011**
(21) Anmeldenummer: 10014049.0
(22) Anmeldetag: 28.10.2010
(51) Int. Cl.: B60G 17/015

(54) **Verfahren zur Steuerung der Niveauregulierung eines Fahrzeugaufbaus eines Kraftfahrzeuges**

(30) Priorität: 08.12.2009 DE 102009057529
(71) Anmelder: IAV GmbH, 10587 Berlin (DE)
(72) Erfinder: Beermann, Ralf, 38542 Leiferde (DE); Kukla, Stefan, 29339 Wathlingen (DE); Staudinger, Sascha, 63110 Rodgau (DE)
(74) Vertreter: Buss, Fritz Gerd

(57) **Zusammenfassung**

Die Erfindung betrifft ein Verfahren zur Steuerung der Niveauregulierung eines Fahrzeugaufbaus eines Kraftfahrzeuges,

Der Erfindung liegt die Aufgabe zugrunde, ein Verfahren zur Steuerung der Niveauregulierung eines Fahrzeugaufbaus eines Kraftfahrzeuges zu schaffen, mit dem auf einfache Weise und ohne aufwendige Nachkorrigierung ein vorgegebener Sollwert eingestellt werden kann.

Erfindungsgemäß wird bei einer ermittelten notwendigen Änderung des Höhenniveaus durch ein Reglungssystem die Betätigungszeit der Ventile zur Durchführung des Höhenänderungsvorganges anhand der im Fahrzeug hinterlegten und speziell für den Fahrzeugtyp ermittelten Hebe- und Absenkkennlinien des Luftfedersystems eingestellt. Dabei wird bei einer durch einen Höhensensor ermittelten Unterschreitung eines vorgegebenen Höhenniveaus dem Luftfedersystem durch die regelbare Ventileinstellung ein Druckmittel zugeführt. Bei einer Überschreitung eines vorgegebenen Höhenniveaus wird aus dem Luftfedersystem durch die regelbare Ventileinstellung ein Druckmittel zur Absenkung des Fahrzeugaufbaus abgelassen.

## Beschreibung

Die Erfindung betrifft ein Verfahren zur Steuerung der Niveauregulierung eines Fahrzeugaufbaus eines Kraftfahrzeuges mit den im Oberbegriff des Patentanspruches 1 genannten Merkmalen.

Aus dem Stand der Technik ist es allgemein bekannt, Kraftfahrzeuge mit einer Niveauregeleinrichtung zu versehen. Die Höhenänderung des Fahrzeugaufbaus gegenüber den Rädern erfolgt dabei durch ein Regelverfahren, mit dem die Luftmenge Im Luftfedersystem des Fahrzeuges geändert wird. Bei Unter- oder überschreltung eines vorgegebenen Höhenniveaus wird durch ein Regelsystem ein Höhenänderungsvorgang eingeleitet. Dabei wird bei Unterschreitung eines vorgegebenen Höhenniveaus dem Luftfedersystem regelbar ein Druckmittel zugeführt und bei Überschreitung eines vorgegebenen Höhenniveaus wird aus dem Luftfedersystem ragelbar ein Druckmittel zur Absenkung des Fahrzeugaufbaus abgelassen.

Aus der EP 1 644 209 B1 ist ein Verfahren zur Höhenregulierung für ein Fahrzeug bekannt, bei dem die Höhenregullerung mit unterschiediichen Regelgeschwindigkeiten durchgeführt wird. Bei Erkennen einer gefährlichen Fahrsituation wird eine schnelle Regelungsgeschwindigkeit gewählt, um somit möglichst schnell das Niveau des Fahrzeuges zu verringern. Durch diese Regelung erfolgt eine lastunabhängige Verfahrgeschwindigkeit des Fahrzeugaufbaues.

Die DE 196 40 149 A1 beschreibt einen Regler für Niveauregeleinrichtungen, bei denen die Regelung anhand der Ist-Hebe-Geschwindigkeit und der lst-Senk-Geschwindigkeit des Fahrzeugaufbaus erfolgt, wobei der Abschaltzeltpunkt des NIveauregelventils in Abhängigkeit von dem Nachlaufverhalten des Fahrzeugaufbaus erfolgt. Das Nachlaufverhalten wird während des Betriebs eingelernt und laufend korrigiert.

In der DE 10 2004 021 592 A1 wird ein Verfahren zur Luftmengenregelung beschrieben, bei der während des Regelvorgangs der zurückgelegte Weg und die dafür benötigte Zeit gemessen werden und dafür ein Regelgeschwindigkeitsbereich ermittelt wird.

Die DE 44 44 549 C1 betrifft ein pneumatisches Federungsaggregat mit einer Niveausteuerung, bei der durch Sensoren der Abstand zwischen den Achsen und dem Fahrzeugaufbau gemessen und daraus die relative Bewegung der Achsen zum Aufbau nach Richtung und Geschwindigkeit ermittelt wird. Bei Überschreitung von vorgegebenen Sollwerten werden die Niveausteuerventile angesteuert und durch Zu-oder Abführen von einer Luftmenge erfolgt ein Anheben oder Absenken des Fahr zeugaufbaus.

Gemäß der DE 10 2006 043 608 A1 erfolgt die Niveauregelung über die Luftfedern anhand der über Höhensensoren ermittelten Höhenänderungen und dem gemessenen Druck im System.

Nachteilig bei dem bekannten Stand der Technik ist eine aufwendige Regelung der Luftfedersysteme zur Einstellung eines gewünschten Sollwertes, Zur Einstellung des Sollwertes ist ein ständiges Nachregulieren der zugeführten oder abgeführten Druckluftmenge notwendig, so dass das Luftfedersystem und die Druck erzeugenden Anlagen zusätzlich hoch belastet werden.

Der Erfindung liegt die Aufgabe zugrunde, ein Verfahren zur Steuerung der Niveauregullerung eines Fahrzeugaufbaus eines Kraftfahrzeuges zu schaffen, mit dem auf einfache Weise und ohne aufwendige Nachkorrigierung ein vorgegebener Sollwert eingestellt werden kann.

Diese Aufgabe wird erfindungsgemäß durch die kennzeichnenden Merkmale des Patentanspruches 1 gelöst.

Erfindungsgemäß wird bei einer ermittelten notwendigen Änderung des Höhenniveaus durch ein Reglungssystem die Betätigungszeit der Ventile zur Durchführung des Höhenänderungsvorganges anhand der im Fahrzeug hinterlegten und speziell für den Fahrzeugtyp ermittelten Hebe- und Absenkkennlinien des Luftfedersystems eingestellt. Dabei wird bei einer durch einen Höhensensor ermittelten Unterschreitung eines vorgegebenen Höhenniveaus dem Luftfedersystem durch die regelbare Ventileinstellung ein Druckmittel zugeführt. Bei einer Überschreitung eines vorgegebenen Höhenniveaus wird aus dem Luftfedersystem bzw. dem Luftfederelement - wenn das Druckmittel innerhalb des Systems bleibt - durch die regelbare Ventileinstellung ein Druckmittel zur Absenkung des Fahrzeugaufbaus abgelassen.

Der Vorteil der erfindungsgemäßen Lösung besteht darin, dass durch die Steuerung der Ventile anhand der im Höhenregelsystem abgespeicherten Hebe- und Absenkkennlinien die Zu- und Abführung des Druckmittels zur Einstellung des Luftfedersystems auf einen vorbestimmten Sollwert genauer eingestellt werden kann und dadurch die Luftfedern schneller den gewünschten Sollwert der Höhenelnstellung erreichen. Aufwendige Ermittlungen zur Nachregulierung und zur Korrigierung des Nachlaufverhaltens des Luftfedersystems entfallen damit. Durch die Verringerung der Nachkorrektur wird auch die Anlage zur Erzeugung der im Luftfedersystem benötigten Luftmenge weniger belastet. Ein weiterer Vorteil der erfindungsgemäßen Lösung besteht darin, dass die aktuellen Werte des Höhenänderungsvorganges zur Korrektur der im Regelungssystem abgespeicherten Hebe- und Absenkkennlinien verwendet werden. Dadurch stellt die Regelung ein "lernfähiges" System dar, mit dem die Einstellung des Luftfedersystems auf einen vorbestimmten Sollwert ständig verbessert wird.

Weitere vorteilhafte Ausgestaltungen sind in den Unteransprüchen beschrieben, sie werden In der Beschreibung zusammen mit ihren Wirkungen erläutert.

Die Erfindung wird nachfolgend anhand eines Ausführungsbeispieles näher beschrieben.

Bei Kraftfahrzeugen mit einer Niveauregulierung sind in bekannter Weise Luftfedern an der Vorder- und Hinterachse bzw. nur der Hinterachse angebracht, die den Fahrzeugaufbau des Kraftfahrzeuges gegenüber den Achsen bzw. Fahrzeugrädern federnd lagern. Zur Aufrechterhaltung des notwendigen Drucks und Luftmenge in dem Luftfedersystem und zur Änderung des Höhenniveaus des Fahrzeugaufbaus gegenüber den Fahrzeugrädern bzw. der Fahrbahn ist das Luftfedersystem über regelbar einstellbare Ventile mit einem Druckmittelerzeugungssystem verbunden. Die Ventile bzw. die Aktuatoren werden durch ein Regelsystem der Niveauregulierung zur Änderung der Luftmenge in dem Luftfedersystem angesteuert, wobei sich die Ansteuerung nach dem zeitlichen Verhalten im Bezug zur Höhenänderung und deren Randbedingungen richtet.

Die aktuelle Lage des Fahrzeugaufbaus gegenüber dem Fahrzeugrad oder der Fahrbahn wird durch ein oder mehrere Höhensensoren erfasst und die ermittelten Werte dem Regelungssystem der Niveauregulierung übermittelt, Durch das Regelungssystem erfolgt eine Überprüfung, ob sich die ermittelten Ist-Werte der Höhenlage des Fahrzeugaufbaus im vorgeschriebenen Sollbereich befinden. Bei Unter- oder Überschreitung eines vorgegebenen Höhenniveaus wird durch das Regelungssystem ein Höhenänderungsvorgang durch entsprechende Betätigung der Ventile eingeleitet. Die Ermittlung des Ist-Höhenabstandes des Fahrzeugaufbaus vom Fahrzeugrad oder von der Fahrbahn und damit die Höhenänderung zwischen dem vorgegebenen Soll-Wert und dem ermittelten Ist-Wert erfolgt in einem parametrierbaren oder selbst adaptierenden Filterzeitraum, der von der Fahrzeugdynamik und den Eingangssignalen der Niveausensoren und Fahrdynamikdaten anderer im Fahrzeug verbauter Systeme, die mittels Datenübertragung dem Regelsystem zur Verfügung gestellt werden, abhängig ist. Für den dynamischen Fllterzeltraum werden gleichzeitig die ermittelten Eingangssignale zur Fahrzeugdynamik zur Längs-, Quer-, Vertikalbeschleunigung, Nicken, Wanken und Gierverhalten berücksichtigt Damit wird erreicht, dass kurzfristige über den vorgegebenen Bereich hinausgehende Höhenänderungen, wie beispielsweise beim Durchfahren eines Schlagloches, nicht bei einer durchzuführenden Höhenänderung berücksichtigt werden. Dadurch wird ein unnötiger Regelvorgang vermieden.

Bei einer ermittelten notwendigen Änderung des Höhennlveaus in Folge einer Unter- oder Überschreitung eines vorgegebenen Höhenniveaus des Fahrzeugaufbaus wird durch das Reglungssystem ein Impuls zur Betätigung der Ventile bzw. der Aktuatoren und damit zur Durchführung eines Höhenänderungsvorganges ausgelöst. Bei einer ermittelten Unterschreitung des vorgegebenen Höhenniveaus wird durch Ansteuerung des für das jeweilige Rad zugeordneten Ventils der Luftfeder regelbar ein Druckmittel bis zur Erreichung des vorgegebenen Soll-Werts zugeführt. Bei Überschreitung eines vorgegebenen Höhenniveaus wird durch Ansteuerung des jewelilgen Ventils aus dem Luftfedersystem regelbar ein Druckmittel zur Absenkung des Fahrzeugaufbaus abgelassen. Die Einstellung der Betätigungszeit der Ventile zur Zu- oder Abführung eines Druckmittels zu den jeweiligen Luftfedern des Luftfederungssystems für die Durchführung des Höhenänderungsvorganges erfolgt durch das Regelungssystem anhand der im Regelsystem hinterlegten und speziell für den Fahrzeugtyp ermittelten Hebe- und Absenkkennlinien des Luftfedersystems. Durch die hinterlegten Hebe- und Absenkkelinien wird die Regelgeschwindigkeit zur Durchführung des Höhenänderungsvorganges in Abhängigkeit vom Start- und Zielniveau eingestellt.

Die in dem Regelungssystem des Höhenänderungsvorganges hinterlegten Hebe- und Absenkkennlinien der Luftfedern werden für jeden Fahrzeugtyp ermittelt, unter anderem anhand von
- jeweils unterschiedllchen Fahrgeschwindigkeiten und Fahrsituationen,
- dem Beladungszustand des Fahrzeuges,
- den durch ein Steuergerät erfassten aktuellen Fahrzeugdaten,
- der ermittelten Längs-, Quer-, Vertikalbeschleunigung, dem Nick-, Wank- und Gierverhalten des Fahrzeuges und
- einer Abweichung von einem vorgegebenen Soll-Höhenwert der Niveauregulierung. Die im Regelungssystem abgespeicherten Hebe- und Absenkkennlinien werden auf der Basis der Parameter der aktuell durchgeführten Höhenänderungen aktualisiert und neu abgespeichert, so dass Regelungs- und Steuerungssystem zur Niveauregulierung des Fahrzeugaufbaus ständig verbessert werden.

## Patentansprüche

1. Verfahren zur Steuerung der Niveauregulierung eines Fahrzeugaufbaus eines Kraftfahrzeuges, bei dem
- der Höhenänderungsvorgang des Fahrzeugaufbaus durch Änderung des Volumens in dem Luftfedersystem erfolgt,
- die Höhenänderungen zwischen dem Fahrzeugaufbau und dem Fahrzeugrad oder der Fahrbahn mittels eines Sensors erfasst werden,
- bei Unter- oder Überschreitung eines vorgegebenen Höhenniveaus durch ein Reglungssystem ein Höhenänderungsvorgang eingeleitet wird,
- bei Unterschreitung eines vorgegebenen Höhenniveaus durch Ansteuerung eines oder mehrerer Aktuatoren dem Luftfedersystem regelbar ein Druckmittel zugeführt wird und
- bei Überschreitung eines vorgegebenen Höhenniveaus durch Ansteuerung eines oder mehrerer Aktuatoren aus dem Luftfedersystem bzw. dem Luftfederelement regelbar ein Druckmittel zur Absenkung des Fahrzeugaufbaus abgelassen wird,
**dadurch gekennzeichnet, dass**
bei einer ermittelten notwendigen Änderung des Höhenniveaus durch das Regelungssystem die Betätigungszeit der Aktuatoren zur Zu- oder Abführung eines Druckmittels zu den jeweiligen Luftfedern des Luftfederungssystems für die Durchführung des Höhenänderungsvorganges anhand der im Regelsystem hinterlegten und speziell für den Fahrzeugtyp ermittelten Hebe- und Absenkkennlinien des Luftfedersystems eingestellt wird.

2. Verfahren nach Anspruch 1,
**dadurch gekennzeichnet, dass**
die In dem Regelungssystem des Höhenänderungsvorganges hinterlegten Hebe- und Absenkkennlinien anhand von jeweils unterschiedlichen Fahrgeschwindigkeiten, Fahrsituationen, bei denen die Daten zur Längs-, Quer-, Vertikalbeschleunigung, zum Nicken, Wanken und Gierverhalten durch Datenübertragung dem Regler zur Verfügung gestellt werden, des Beladungszustandes des Fahrzeuges, der durch ein Steuergerät erfassten aktuellen Fahrzeug- und Motordaten
und einer Abweichung von einem vorgegebenen Soll-Höhenwert ermittelt wurden.

3. Verfahren nach Anspruch 1 und 2,
**dadurch gekennzeichnet, dass**
durch die hinterlegten Hebe- und Absenkkennlinien die Regelgeschwindigkeit zur Durchführung des Höhenänderungsvorganges in Abhängigkeit vom Start- und Zielniveau eingestellt wird.

4. Verfahren nach Anspruch 1 bis 3,
**dadurch gekennzeichnet, dass**
die aktuellen Parameter der anhand der hinterlegten Hebe- und Absenkkennlinien durchgeführten Höhenänderungen als Korrekturwerte zur Aktualisierung der hinterlegten Hebe- und Absenkkennlinien verwendet und im Regelungssystem abgespeichert werden.

5. Verfahren nach Anspruch 1 bis 4,
**dadurch gekennzeichnet, dass**
die Ermittlung eines Ist-Höhenabstandes des Fahrzeugaufbaus vom Fahrzeugrad oder von der Fahrbahn in einem dynamischen Filterzeitraum erfolgt, der von den Eingangssignalen zur Fahrzeugdynamik zur Längs-, Quer-, Vertikalbeschleunigung, Nicken, Wanken und Gierverhalten abhängig ist.
